Europäisches Patentamt

European Patent Office

Office européen des brevets

(19)

(11) Veröffentlichungsnummer: **0 268 976**
**A2**

(12) **EUROPÄISCHE PATENTANMELDUNG**

(21) Anmeldenummer: 87116930.6

(22) Anmeldetag: 17.11.87

(51) Int. Cl.⁴ **B01D 23/02** , B01D 39/20

(30) Priorität: 22.11.86 DE 8631322 U

(43) Veröffentlichungstag der Anmeldung:
01.06.88 Patentblatt 88/22

(84) Benannte Vertragsstaaten:
CH DE GB LI

(71) Anmelder: Kirchmeier, Hans
Kleinheide 21
D-5067 Kürten 2(DE)

(72) Erfinder: Kirchmeier, Hans
Kleinheide 21
D-5067 Kürten 2(DE)

(74) Vertreter: Blumbach Weser Bergen Kramer
Zwirner Hoffmann Patentanwälte
Sonnenbergerstrasse 43
D-6200 Wiesbaden 1(DE)

(54) **Filtertrog für Flüssigmetalle.**

(57) Es wird ein Filtertrog für Flüssigmetalle beschrieben, bei dem eine oder mehrere Filterplatten (9, 10) in vertikale Randnuten (11) des Troges (1) von oben einschiebbar sind. Auf der Zulaufseite ist vor der ersten Filterplatte eine aus feuerfestem Material bestehende Syphonplatte (7) ebenfalls in eine Randnut (8) eingeführt und endet mit ihrer Unterkante im Abstand vom Trogboden (2), so daß das flüssige Metall erst um die Unterkante der Syphonplatte (7) herumströmen muß, bevor es zur ersten Filterplatte (9) gelangt. Die Filterplatten (9, 10) können während des Betriebes ausgewechselt werden. Sie bestehen vorzugsweise aus Keramikschaum.

Fig. 1

EP 0 268 976 A2

## Filtertrog für Flüssigmetalle

Die Erfindung betrifft einen Filtertrog für Flüssigmetalle mit wenigstens einer Filterplatte, die in einem Trog aus feuerfestem Material austauschbar angeordnet ist. Bei einem bekannten Filter der vorgenannten Art (US-PS 4 024 056), das insbesondere zum Filtrieren von flüssigem Aluminium bestimmt ist, liegt eine Filterplatte aus Keramikschaum in einer formangepaßten Öffnung am Boden des Filtertroges. Um die Filterplatte auswechseln zu können, ist die Platte am Rand konisch ausgeführt und die Ränder der Öffnung sind entsprechend angepaßt. Die Filterplatte kann dann nur bis zur einer bestimmten Tiefe in die Öffnung eindringen und wird auf diese Weise leicht lösbar gehalten.

Bei dem bekannten Filter kann die Filterplatte nur bei einer Betriebsunterbrechung gewechselt werden. Außerdem benötigt das Filter verhältnismäßig viel Platz, der häufig in Produktionsrichtung nicht zur Verfügung steht. Schließlich ist die Größe der Filterplatte durch die Größe der Öffnung unveränderbar festgelegt.

Der Erfindung liegt die Aufgabe zugrunde, ein verbessertes Filter der eingangs genannten Art zu - schaffen, das eine Anpassung der Filtergröße ermöglicht, nur wenig Platz beansprucht und die Möglichkeit eröffnet, Filterplatten ohne Betriebsunterbrechung zu wechseln. Darüber hinaus sollen Oxide und andere, auf der Oberfläche - schwimmende Verunreinigungen sicher zurückgehalten werden.

Zur Lösung der Aufgabe geht die Erfindung aus von dem eingangs erläuterten Filtertrog und ist dadurch gekennzeichnet, daß die Filterplatte etwa vertikal in Randnuten des Troges eingeschoben ist und daß auf der Zulaufseite vor der Filterplatte eine aus feuerfestem Material bestehende Syphonplatte etwa vertikal in Randnuten des Troges sitzt und mit ihrer Unterkante im Abstand von Trogboden endet.

Durch die vertikale Lage der Filterplatte kann der Filtertrog sehr kurz gehalten sein und beansprucht daher in der Produktionsrichtung wenig Platz. Die Filterplatte ist auch im Betrieb zugänglich und kann ausgewechselt werden. Die Syphonplatte hält auf der Oberfläche - schwimmende Verunreinigungen schon vor der Filterplatte zurück.

Weiterbildungen der Erfindung sind Gegenstand der Unteransprüche. So können zwei Filterplatten im Abstand voneinander etwa vertikal in Randnuten des Troges eingeschoben sein. Dann besteht die Möglichkeit, im kontinuierlichen Betrieb eine Filterplatte unter Beibehaltung der Filterwirkung der jeweils anderen Platte zu wechseln. Gegebenenfalls können auch drei oder mehr Filterplatten hintereinander angeordnet sein. Als Material für die Filterplatten wird vorzugsweise an sich bekannter Keramikschaum verwendet. Dabei kann vorgesehen sein, daß die Porosität, gemessen in Form der Porenzahl je Längeneinheit bei den beiden Filterplatten etwa gleich ist. In vorteilhafter Weise kann jedoch die in Durchflußrichtung vordere Filterplatte aus einem grobporigeren Keramikschaum als die hintere Filterplatte bestehen. Die vordere Platte filtert dann die groberen Verunreinigungen aus und die nachgeschaltete weitere Platte sorgt für eine Feinfilterung. Um den Durchflußwiderstand der beiden Filterplatten aneinander anzugleichen, kann die vordere Filterplatte kleineren Querschnitt als die hintere Filterplatte besitzen. Das läßt sich in Weiterbildung der Erfindung leicht dadurch erreichen, daß die Höhe der vorderen Filterplatte geringer ist als die der hinteren Filterplatte und daß unter der vorderen Filterplatte eine Verschlußplatte in den Randnuten angeordnet ist, derart, daß die Oberkante der vorderen und hinteren Filterplatte etwa in gleicher Höhe liegt.

Der Abfluß wird mit Vorteil durch eine Ausnehmung am Oberrand einer Tragwand gebildet. Wenn für einen bestimmten Einsatzzweck Filterplatten mit verhältnismäßig kleinem Querschnitt genügen, kann auf einfache Weise die Höhe der Filterplatten verringert werden. Der Boden des Abflusses muß dann tiefer gelegt werden, derart, daß er im Niveau unter der Oberkante der Filterplatten liegt. Es kann jedoch auch jeweils eine Verschlußplatte unter den Filterplatten in die Randnuten eingebracht werden, um die Oberkante der Filterplatten in gleicher Höhe zu halten.

Zur Entleerung des Filtertroges besteht die Möglichkeit, in der die Syphonplatte enthaltenden Einlaufkammer einen verschließbaren Bodenablauf vorzusehen. Zur Abdichtung der Filterplatten am Rand und am Boden wird zweckmäßig ein Dichtband aus einem feuerfesten, sich unter Wärmeeinwirkung ausdehnenden Material an sich bekannter Art vorgesehen.

Der Boden des Troges kann eben sein oder nach einer Empfehlung der Erfindung die Form eines Kreiszylinders haben, dessen Achse quer zur Hauptfläche der Filterplatte bzw. -platten verläuft.

Nachfolgend wird ein Ausführungsbeispiel der Erfindung in Verbindung mit den Zeichnungen beschrieben. Es zeigen:

Fig. 1 einen Querschnitt durch einen Filtertrog nach der Erfindung;

Fig. 2 eine Aufsicht des Filtertroges nach Fig. 1;

Fig. 3 eine Schnittansicht des Filtertroges nach Fig. 1 und 2 entsprechend der Schnittlinie 3-3 in Fig. 1:

Fig. 4 eine Schnittansicht des Filtertroges nach Fig. 1 bis 3 entlang der Schnittlinie 4-4 in Fig. 1.

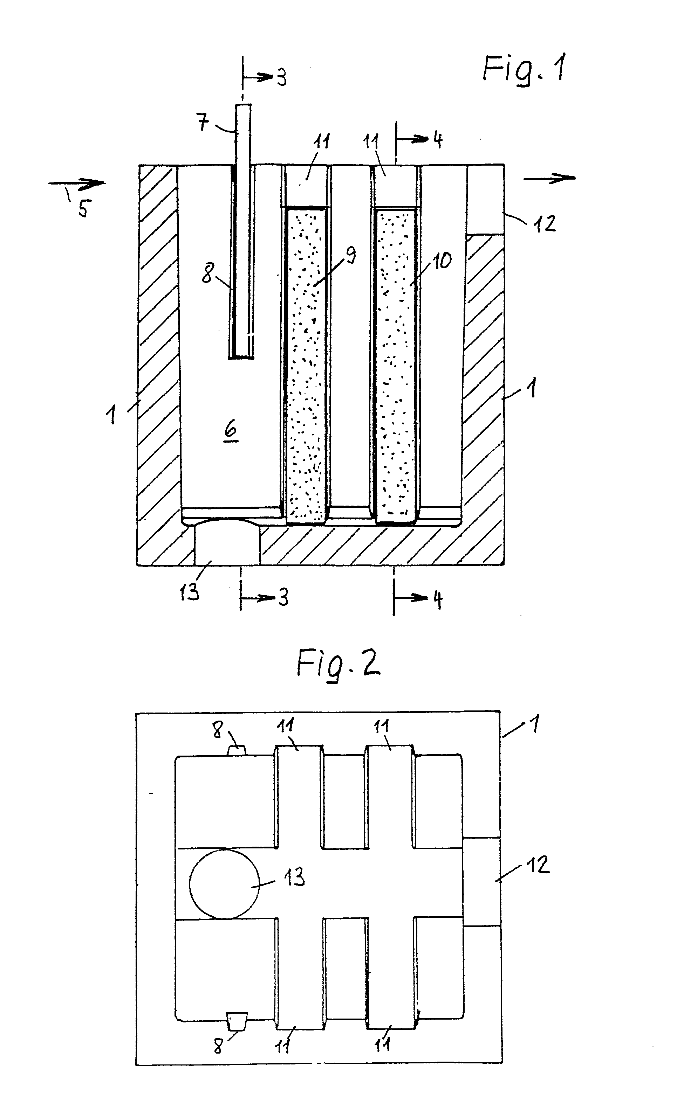

Der in den Figuren dargestellte Filtertrog 1 besteht aus feuerfestem Material und hat die äußere Form eines Quaders. Der Innenraum ist im oberen Bereich ebenfalls quaderförmig und geht in Richtung zum Boden 2 in eine kreiszylindrische Form über. In der in Zulaufrichtung (Pfeil 4 in Fig. 1) ersten Kammer 6 ist eine Syphonplatte 7 aus feuerfestem Material in Randnuten 8 von oben eingeschoben. Flüssiges Metall, das über einen Zulauf in die Kammer 6 vor der Syphonplatte 7 eingebracht wird, muß dann um die Unterkante der Platte 7 herumlaufen, bevor es durch die erste Filterplatte 9 aus Keramikschaum hindurchlaufen kann. Die Platte 9 ist ebenso wie die weitere Filterplatte 10 in Randnuten 11 des Filtertroges 1 eingesetzt. Zur Abdichtung am Boden und im Bereich der Randnuten dient ein Dichtband (nicht gezeigt) an sich bekannter Art, das sich unter Hitzeeinwirkung ausdehnt und damit für eine sichere Abdichtung sorgt. Nach Durchtritt durch die beiden Filterplatten 10 kann das gefilterte Metall den Filtertrog 1 durch eien Ausnehmung 12 am Oberrand verlassen. Eine im Betrieb durch einen Stopfen (nicht gezeigt) verschlossene Bohrung 13 im Boden der Kammer 6 ermöglicht eine Entleerung des Filtertroges.

Die Filterplatten 9, 10 sind während des Betriebs von oben zugänglich. Es besteht daher die Möglichkeit, die beiden filterplatten 9, 10 ohne Betriebsunterbrechung nacheinander auszuwechseln. Durch leicht konische Gestaltung der Randnuten 11 (vergl. Fig. 2) wird das Auswechseln erleichtert. Entsprechendes gilt für die Syphonplatte mit ihrer Randnut 8.

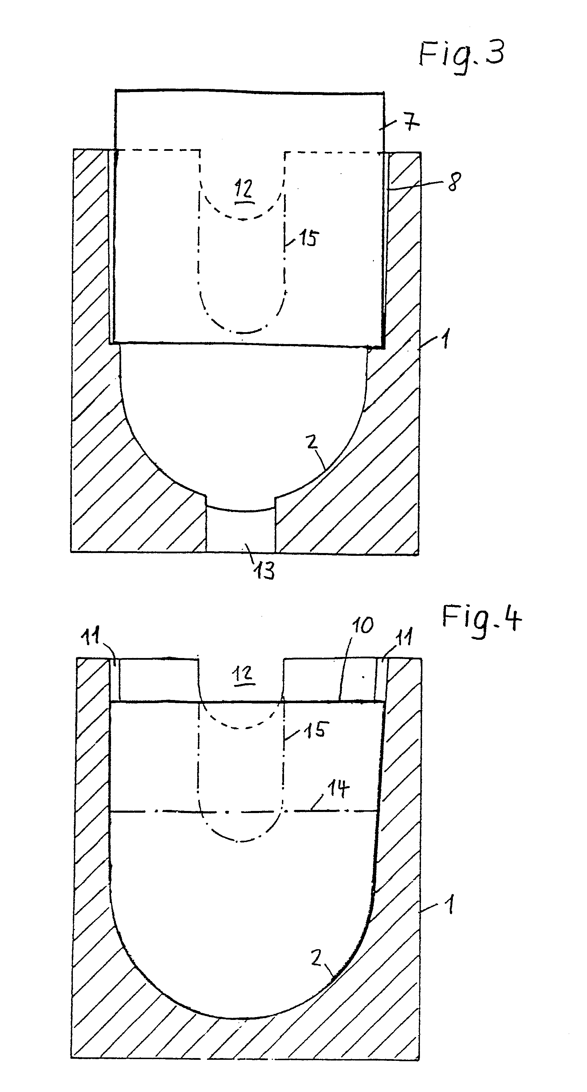

In Fig. 4 zeigt eine strichpunktierte Linie 14, daß auch eine Filterplatte geringerer Höhe Verwendung finden kann, deren Oberkante mit der Strickpunktierten Linie 14 zusammenfällt. Die Ausnehmung 12 ist dann, wie eine weitere strichpunktierte Linie 15 andeutet, in ihrer Tiefe entsprechend anzupassen.

## Ansprüche

1. Filtertrog für Flüssigetalle mit wenigstens einer Filterplatte, die in einem Trog aus feuerfestem Material austauschbar angeordnet ist, **dadurch gekennzeichnet,** daß die Filterplatte (9, 10) etwa vertikal in Randnuten (11) des Troges (1) eingeschoben ist und daß auf der Zulaufseite vor der Filterplatte (9) eine aus feuerfestem Material bestehende Syphonplatte (7) etwa vertikal in Randnuten (8) des Troges (1) sitzt und mit ihrer Unterkante im Abstand vom Trogboden (2) endet.

2. Filtertrog nach Anspruch 1, dadurch gekennzeichnet, daß zwei Filterplatten (9, 10) im Abstand voneinander etwa vertikal in Randnuten (11) des Troges eingeschoben sind.

3. Filtertrog nach Anspruch 2, dadurch gekennzeichnet, daß die Filterplatten (9, 10) aus Keramikschaum bestehen.

4. Filtertrog nach Anspruch 3, dadurch gekennzeichnet, daß die Porenzahl je Längeneinheit bei den beiden Filterplatten (9, 10) etwa gleich ist.

5. Filtertrog nach Anspruch 3, dadurch gekennzeichnet, daß die in Durchflußrichtung vordere Filterplatte (9) aus einem grobporigeren Keramikschaum als als die hintere Filterplatte (10) besteht.

6. Filtertrog nach Anspruch 5, dadurch gekennzeichnet, daß die vordere Filterplatte kleineren Querschnitt als die hintere Filterplatte besitzt.

7. Filtertrog nach Anspruch 6, dadurch gekennzeichnet, daß die Höhe der vorderen Filterplatte geringer ist als die der hinteren Filterplatte und daß unter der vorderen Filterplatte eine Verschlußplatte in den Randnuten (11) angeordnet ist, derart, daß die Oberkante der vorderen und hinteren Filterplatte etwa in gleicher Höhe liegt.

8. Filtertrog nach einem der Ansprüche 1 bis 7, dadurch gekennzeichnet, daß der Abfluß durch eine Ausnehmung (12) am Oberrand einer Trogwand gebildet ist.

9. Filtertrog nach einem der Ansprüche 1 bis 8, dadurch gekennzeichnet, daß in der von der bzw. von der ersten Filterplatte (9) gebildeten, die Syphonplatte (7) enthaltenden Einlaufkammer (6) ein verschließbarer Bodenablauf (13) angeordnet ist.

10. Filtertrog nach einem der Ansprüche 1 bis 9, dadurch gekennzeichnet, daß die Filterplatte bzw. -platten (9, 10) am Rand mit einem Dichtband aus feuerfestem, sich unter Wärmeeinwirkung ausdehnenden Material versehen sind.

11. Filtertrog nach einem der Ansprüche 1 bis 10, dadurch gekennzeichnet, daß der Boden (2) des Troges (1) die Form eines Kreiszylinders hat, dessen Achse quer zur Hauptfläche der Filterplatte bzw. -platten (9, 10) verläuft.

0 268 976

Fig.1

Fig.2

Fig.3

Fig.4